(19) Europäisches Patentamt

European Patent Office

Office européen des brevets

(11) EP 0 903 946 A1

(12) **EUROPEAN PATENT APPLICATION**

(43) Date of publication:
24.03.1999 Bulletin 1999/12

(51) Int Cl.$^6$: **H04N 7/30**, H03M 7/30, G06T 5/20, H04N 5/44, H04N 7/01, H04N 7/68

(21) Application number: 98402150.1

(22) Date of filing: 31.08.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 19.09.1997 FR 9711703

(71) Applicant: **THOMSON multimedia**
**92100 Boulogne Billancourt (FR)**

(72) Inventors:
• **Olivier, Yannick**
**92100 Boulogne Billancourt (FR)**
• **Robert, Philippe**
**92100 Boulogne Billancourt (FR)**
• **Barbonneau, Jean-Yves**
**92100 Boulogne Billancourt (FR)**
• **Briand, Gérard**
**92100 Boulogne Billancourt (FR)**

(74) Representative: **Brykman, Georges et al**
**THOMSON multimedia,**
**46 quai A. Le Gallo**
**92648 Boulogne Cédex (FR)**

(54) **Device and method of image interpolation with motion compensation**

(57) The invention relates to a process for temporal interpolation with motion compensation of an image j located between an image n-1 and an image n, making an estimate of motion (1) between the image n-1 and the image n to provide a field of motion vectors V(n-1, n), and interpolating (2) the image j as a function of this motion vector field, characterized in that it detects (3) defective motion vectors and in that it performs low-pass filtering (4) over zones of the interpolated image corresponding to these defective vectors.

The applications are in the field of image processing, for example conversion between standards.

**Fig 2b**

## Description

The invention relates to a process and to a device for temporal image interpolation with motion compensation, employed in the processing of television image sequences. It is more particularly designed for motion estimators of the recursive PEL type, that is to say ones based on calculating the motion at the pixel level rather than at the image block level.

The possibility of calculating motion at the pixel level has made it possible to improve the quality of interpolation systems considerably. However, the motion cannot be measured at all points in the image: when a plurality of objects are moving differently in a scene, for example motion of a first plane relative to a background plane, pixels appear or disappear from one image to another, which makes it impossible to measure their movement. The presence of these zones interferes with the motion estimator, and the resulting defects are particularly problematic. These zones require particular treatment to suppress or at least mask the defects.

An interpolation process having motion compensation with a fallback solution is known, having been described in French Patent No. 8904256. The process detects the defective motion vectors by means of a local operator of the variance type. The motion vector field is then modified by forcing the defective vectors to the value zero. The interpolation with motion compensation is then applied with this new motion vector field.

A pixel labelling process is also known from French Patent No. 9104164, classifying them as normal, appearing, disappearing or occluding pixels, for particular processing as a function of how they are labelled. The interpolation is based on the temporal projection of the motion vector field and is adapted to this pixel classification.

Although the first process is simple to use, the obtained image quality is not always satisfactory. The second process is much more complex, and requires estimation of the motion fields of the input images. The improvement obtained with a process of this type is not commensurate with the complexity which it entails.

The object of the present invention is to overcome the aforementioned drawbacks.

The invention relates to a process for temporal interpolation with motion compensation of an image j located between an image n-1 and an image n, making an estimate of motion between the image n-1 and the image n to provide a field of motion vectors V(n-1, n), and interpolating the image j as a function of this motion vector field, characterized in that it detects defective motion vectors and in that it performs low-pass filtering over zones of the interpolated image corresponding to these defective vectors.

It also relates to a device for implementing the process described above, comprising a motion estimator which receives an image n-1 and an image n in order to calculate a field of motion vectors V(n-1, n), and an interpolation circuit which calculates an interpolated image Y(j) from these two images n-1 and n and the motion vector field, characterized in that it also includes a circuit for detecting defective motion vectors, which receives the motion vector field, and a low-pass filtering circuit for filtering the interpolated image as a function of the information transmitted by the detection circuit.

The invention will be clearly understood, and its advantages and other characteristics will become more apparent during the following description, given by way of example and with reference to the appended figures, in which:

- Figure 1 represents a diagram of the device according to the invention;
- Figure 2 represents the morphological operations performed on the image with the points having defective vectors marked.

By virtue of the invention, the zones where the interpolation with motion compensation is defective are processed satisfactorily. The process is simple to employ. It gives better results than are known from the prior art with equivalent complexity. For comparable processing, its image quality is improved.

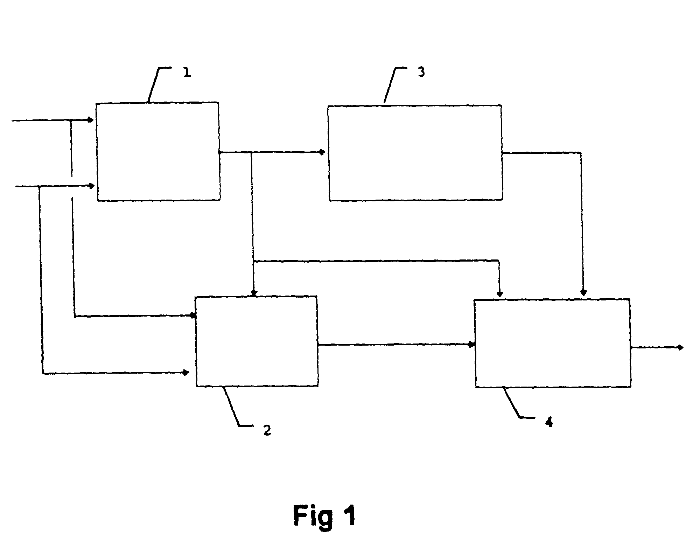

Figure 1 represents a device for implementing the process according to the invention.

The two inputs of the device are connected in parallel to a motion estimator 1 and to an interpolation circuit 2. The output of the motion estimator 1 is connected in parallel to the input of a defect detection circuit 3, to a third input of the interpolation circuit 2 and to a first input of a low-pass filter 4. The output of the interpolation circuit 2 is connected to a second input of the low-pass filter 4. The defect detection circuit 3 is connected to a third input of the low-pass filter 4. The output of this filter is the output of the device.

The digitally encoded luminance information Yn-1, for the preceding image n-1, and Yn for the current image n are present simultaneously on the first input and the second input of the device. An estimate of motion is made between these two images. This motion estimate may be of the recursive PEL type. A motion vector is then assigned at the level of each pixel, thus creating a field of motion vectors V(n-1, n) for the image j to be interpolated which is located between the images n-1 and n. This vector field is transmitted, amongst other things, to the third input of the interpolation circuit 2. On its first two inputs, this circuit receives the information Yn-1 and Yn. On the basis of the motion information coming from the field of motion vectors V(n-1, n), and without taking account of a possible deficiency of the motion vectors, which deficiency will be defined later, an interpolated luminance image Y(j) is calculated and transmitted to the low-pass filter 4.

The vector field is also transmitted to a defect detection circuit 3. The function of this circuit is to detect the defective motion vectors. This detection uses measurement of the spatial incoherence of the horizontal and vertical components of the vector field.

This measurement may be performed by a variance calculation on each component of each vector of the current vector field (temporal index t).

In one illustrative embodiment, the calculation, for a given pixel, is carried out on a window of 5 x 5 pixels centred around this pixel. The mathematical equation of this variance calculation is then given by the following equations:

$$var\_vx(i,j,t) = \frac{1}{25} \sum_{k=-2}^{k=2} \sum_{l=-2}^{l=2} (vx(i+k,j+l,t) - moy\_vx(i,j,t))^2$$

$$var\_vy(i,j,t) = \frac{1}{25} \sum_{k=-2}^{k=2} \sum_{l=-2}^{l=2} (vy(i+k,j+l,t) - moy\_vy(i,j,t))^2$$

v(i, j, t) represents the motion vector assigned to the pixel of column i and row j for the image t,

vx(i, j, t) and vy(i, j, t) are the horizontal and vertical components of the motion vector v(i, j, t).

moy_v(i, j, t) is the average value of v over the window centred around the pixel i, j for the image t.

The results var_vx(i, j, t) and var_vy(i, j, t) are then compared with a threshold. If one of the 2 variances exceeds the threshold, the vector is then marked as defective. This threshold is, for example, taken as equal to 10. A binary image of the processed vector field is then obtained, in which the binary level "1" denotes the defective vectors and the level "0" denotes the non-defective vectors.

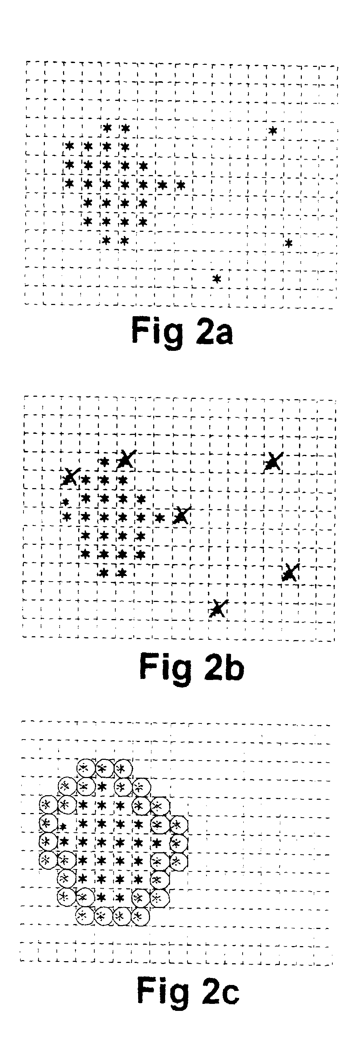

This binary image is then processed by a mathematical morphology filter in order to eliminate the isolated markings and expand the zones of defective vectors. This processing, described below, is also carried out by the error detection circuit 3. Figures 2a, 2b, 2c represent the actions of the various operations on the pixels of an image.

A first processing operation is filtering of the erosion type on the basis of a sliding structuring element covering the binary image previously obtained. This structuring element is a window or image block of determined size, in our example a block of size 3 × 3 pixels. If, for a pixel in the image marked with "1", at least four neighbouring pixels belonging to the structuring element are marked with "1", then this marking ("1") is retained, otherwise it is set to "0".

Figure 2a represents an example of a binary image portion obtained after processing of the vector field. The asterisks present in the boxes symbolizing the pixels correspond to the vectors marked as defective by thresholding the variance. Figure 2b represents the binary image obtained after erosion by a structuring element of size 3 × 3 pixels. The asterisks which have been crossed out correspond to the pixels whose marking is suppressed after the morphological erosion operation. They correspond to the value "0", and the remaining asterisks correspond to the value "1".

The second processing operation, carried out on this new image, is filtering of the expansion type. The structuring element used is, for example, a block of size 3 × 3 pixels. If, for a pixel marked "0", at least one neighbouring pixel belonging to the structuring element is marked with "1", then the marking of this pixel is forced to "2".

Figure 2c represents the ternary image obtained after expansion carried out on the eroded image. The structuring element has the size 3 × 3 pixels. The circled asterisks appearing at the border of the asterisks which have not been crossed out from the preceding image correspond to the pixels obtained after expansion, and therefore to the marking value "2".

The ternary mask obtained in this way, available at the output of the defect detection circuit, is transmitted to the low-pass filter 4.

As indicated above, the interpolated image is transmitted onto a second input of the low-pass filter 4, which also receives the motion vector field on a first input, and the ternary mask on a third input.

The low-pass filtering is carried out on the defective zones in the following way:

- if the current pixel is marked "0", no filtering is applied to the corresponding pixel of the interpolated image received as input;
- if the current pixel is marked "1", low-pass filtering is applied to this pixel over a zone of size 5 × 5 pixels around the corresponding defective pixel in the received image;
- if the current pixel is marked "2", low-pass filtering is applied to a zone of size 3 × 3 pixels around the corresponding defective pixel in the received image.

The sizes of the filtering windows are given by way of example. The less severe low-pass filtering applied at the periphery of the defective zones (pixels marked "2") permits soft transition between the defective pixel zones and the rest of the image.

This filtering may be adapted to the value of the variance which is associated with the vector and measures its local spatial coherence. This quantity is then employed to determine the coefficients of the low-pass filter, thus modifying its response as a function of the confidence attributed to the current vector.

The filtering may be applied to the chrominance values, as well as the luminance values. The interpolation circuit then calculates the interpolated chrominance images, on which these filtering operations are carried out.

The fields of application of the invention relate, for example, to frequency conversion, changing between standards or any application involving temporal image interpolation on the basis of motion compensation.


## Claims

1. Process for temporal interpolation with motion compensation of an image j located between an image n-1 and an image n, making an estimate of motion (1) between the image n-1 and the image n to provide a field of motion vectors V(n-1, n), and interpolating (2) the image j as a function of this motion vector field, characterized in that it detects (3) defective motion vectors and in that it performs low-pass filtering (4) over zones of the interpolated image corresponding to these defective vectors.

2. Process according to Claim 1, characterized in that the defective motion vectors are determined as a function of variance information measuring the local spatial incoherence of the motion vectors.

3. Process according to Claim 2, characterized in that the filtering is adapted to the value of the variance.

4. Process according to one of the preceding claims, characterized in that the detection of defective motion vectors is followed by morphological erosion and expansion operations.

5. Process according to Claim 4, characterized in that the structuring elements used for the morphological operations are windows of size 3 × 3 pixels.

6. Process according to Claim 4 or 5, characterized in that the filtering window employed for the low-pass filtering is of a smaller size for the pixels marked after the expansion operation than is used for the pixels whose marking is obtained after the erosion operation.

7. Process according to Claim 6, characterized in that the size of the filtering window for the pixels which are obtained after erosion is 5 × 5 pixels, and that of the one used for the pixels which are obtained after expansion is 3 × 3 pixels.

8. Process according to any one of the preceding claims, characterized in that the interpolation and filtering are applied to the chrominance images.

9. Device for implementing the process according to Claim 1, comprising a motion estimator (1) which receives an image n-1 and an image n in order to calculate a field of motion vectors V(n-1, n), and an interpolation circuit (2) which calculates an interpolated image Y(j) from these two images n-1 and n and the motion vector field, characterized in that it also includes a circuit (3) for detecting defective motion vectors, which receives the motion vector field, and a low-pass filtering circuit (4) for filtering the interpolated image as a function of the information transmitted by the detection circuit (3).

10. Device according to Claim 9, characterized in that the detection circuit (3) detects the defective motion vectors on the basis of variance information.

11. Device according to Claim 9 or 10, characterized in that the circuit (3) for detecting defective vectors supplies a binary image identifying the pixels relating to the defective motion vectors, and in that it performs morphological erosion and expansion operations on this image in order to supply a ternary image to the low-pass filter (4).

12. Device according to Claim 9, 10 or 11, characterized in that the low-pass filtering of the interpolated image is carried out on a filtering window with smaller dimensions for the pixels which are marked after the expansion operation than for the pixels whose marking is obtained after the erosion operation.

13. Device according to Claim 10, characterized in that the filtering circuit (4) determines the coefficients of the low-pass filter as a function of the variance measuring the local spatial incoherence of the motion vectors.

14. Device according to Claim 9, characterized in that the interpolation circuit (2) interpolates the chrominance images, and in that the filtering circuit filters these interpolated chrominance images.

**Fig 1**

**Fig 2a**

**Fig 2b**

**Fig 2c**

**European Patent Office**

## EUROPEAN SEARCH REPORT

Application Number

EP 98 40 2150

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y,D | EP 0 390 660 A (THOMSON CONSUMER ELECTRONICS) 3 October 1990<br>* column 1, line 1 - line 22 *<br>* column 4, line 3 - line 18; figure 7 * | 1,2,4,<br>8-11,14 | H04N7/30<br>H03M7/30<br>G06T5/20<br>H04N5/44 |
| A | * column 6, line 18 - column 9, line 1 * | 3,5-7,<br>12,13 | H04N7/01<br>H04N7/68 |
| | --- | | |
| Y | US 5 534 946 A (DE HAAN GERARD ET AL) 9 July 1996<br>* column 1, line 21 - column 2, line 14 * | 1,2,4,<br>8-11,14 | |
| | ----- | | |

TECHNICAL FIELDS
SEARCHED (Int.Cl.6)

H04N
G06T

The present search report has been drawn up for all claims

| Place of search | Date of completion of the search | Examiner |
|---|---|---|
| BERLIN | 5 November 1998 | Raeymaekers, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 98 40 2150

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-1998

| Patent document cited in search report | | Publication date | Patent family member(s) | | Publication date |
|---|---|---|---|---|---|
| EP 0390660 | A | 03-10-1990 | FR | 2645383 A | 05-10-1990 |
| | | | AT | 117494 T | 15-02-1995 |
| | | | DE | 69016074 D | 02-03-1995 |
| | | | DE | 69016074 T | 24-05-1995 |
| | | | ES | 2066161 T | 01-03-1995 |
| | | | JP | 3001787 A | 08-01-1991 |
| | | | PT | 93628 A | 20-11-1990 |
| | | | US | 5057921 A | 15-10-1991 |
| US 5534946 | A | 09-07-1996 | DE | 69315626 D | 22-01-1998 |
| | | | DE | 69315626 T | 28-05-1998 |
| | | | EP | 0577165 A | 05-01-1994 |
| | | | JP | 6054302 A | 25-02-1994 |

EPO FORM P0459

For more details about this annex : see Official Journal of the European Patent Office, No. 12/82